**Europäisches Patentamt**

**European Patent Office**

**Office européen des brevets**

(11) Veröffentlichungsnummer: **0 257 203**

**A1**

# EUROPÄISCHE PATENTANMELDUNG

(21) Anmeldenummer: **87107255.9**

(22) Anmeldetag: **19.05.87**

(51) Int. Cl.⁴: **F16L 53/00**

(30) Priorität: **22.08.86 DE 8622603 U**

(43) Veröffentlichungstag der Anmeldung:
**02.03.88 Patentblatt 88/09**

(84) Benannte Vertragsstaaten:
**AT BE DE FR GB IT LU NL SE**

(71) Anmelder: **REHAU AG + Co**
**Rheniumhaus**
**D-8673 Rehau(DE)**

(72) Erfinder: **Der Erfinder hat auf seine Nennung**
**verzichtet**

(54) **Flüssigkeitsschlauch aus Kunststoff.**

(57) Die Erfindung betrifft einen Flüssigkeitsschlauch (1) aus Kunststoff, insbesondere für Scheibenwaschanlagen in Kraftfahrzeugen. Der Flüssigkeitsschlauch (1) ist längs verlaufend mit einem Heizleiter (3) verbunden. Hierfür ist das Schlauchlumen (2) unter Bildung einer längs verlaufenden Querschnittsverdickung (11) der Schlauchwandung einseitig versetzt. Der Heizleiter (3) selbst ist mit Abstand zum Lumen (2) derart in die Querschnittsverdickung (11) eingebracht, daß der Schlauchwandbereich (111) zwischen dem Lumen (2) und dem Heizleiter (3) im Querschnitt dünner ist als der Schlauchwandbereich (112) zwischen dem Heizleiter (3) und der Oberfläche des Schlauches (1).

# FLÜSSIGKEITSSCHLAUCH AUS KUNSTSTOFF

Die Neuerung betrifft einen Flüssigkeitsschlauch aus Kunststoff, insbesondere für Scheibenwaschanlagen in Kraftfahrzeugen, wobei der Schlauch längsverlaufend mit einem Heizleiter verbunden ist.

Aus dem DE-GM 85 20 557.5 ist ein derartiger Flüssigkeitsschlauch bekannt geworden. Bei dieser Anordnung ist ein Heizkabel mit einem flexiblen Kunststoff-Schlauch durch ein Geflecht, welches beide Teile zu einer Einheit zusammenfaßt, miteinander verbunden. An den jeweiligen Enden dieser Einheit ist ein spezieller Geflechtsabschluß angeordnet, der ein Aufspleissen des Geflechts verhindert.

Dieser bekannte beheizbare Schlauch ist aufwendig in der Herstellung, weil hier zwei Einzelelemente durch eine Geflechtsumwicklung zu einer Einheit hergestellt werden müssen. Nachteilig ist ferner, daß das Geflecht flexibel ist und der über das Geflecht am Kunststoff-Schlauch festgelegte Heizleiter durch Druckanwendung verschoben werden kann. Darüber hinaus ist das Geflecht durchlässig für Feuchtigkeit und feuchten Schmutz, so daß korrosive Beschädigungen des Heizleiters sowie dessen Verschmutzung die Lebensdauer der Einheit "beheizbarer Schlauch" negativ beeinflussen.

Hier setzt die Neuerung ein, die es sich zur Aufgabe gestellt hat, eine einfach herstellbare Einheit "beheizbarer Schlauch" anzugeben, welche einen geringen Energieverbrauch aufweist und den Heizgrad ohne Zuhilfenahme eines haltenden Geflechts gegenüber dem Kunststoff-Schlauch fixiert. Neuerungsgemäß wird dazu vorgeschlagen, daß das Lumen des Schlauches unter Bildung einer längsverlaufenden Querschnittsverdickung einseitig versetzt ist, und daß der Heizleiter mit Abstand zum Lumen derart in die Querschnittsverdickung eingebracht ist, daß der Schlauchwandbereich zwischen Lumen und Heizleiter im Querschnitt dünner ist als der Schlauchwandbereich zwischen Heizleiter und Schlauchoberfläche.

Dieser Aufbau ist einfach in der Herstellung, da der Schlauch mit der Lumenversetzung und dem in die Querschnittsverdickung eingebrachten Heizleiter in einem Arbeitsgang durch Extrusion hergestellt wird. Bei diesem Extrusionsvorgang läuft der Heizleiter durch einen Querspritzkopf direkt in das Extrudat ein und wird vom Kunststoff der Querschnittsverdickung eingehüllt. Der Heizleiter ist damit durch das Kunststoffgefüge fixiert und unverschieblich in dem Schlauchaufbau festgelegt. Bedingt durch die Tatsache, daß der Kunststoff den Heizleiter fest anliegend umgibt, ist dieser vor mechanischen oder korrosiven Beschädigungen sowie vor Verschmutzung absolut geschützt. Der Flüssigkeitsschlauch der Neuerung wird mit dem versetzten Lumen und dem in die längsverlaufende Querschnittsverdickung eingesetzten Heizleiter in einem einzigen Arbeitsgang hergestellt, wobei die Fixierung des Heizleiters am Schlauch nicht durch eine Umflechtung in Längsrichtung mit den geschilderten Nachteilen geschieht, sondern durch Umspritzen mit dem Kunststoffmaterial des Schlauches. Mit dem Wegfall der Längsumflechtung entfällt auch ein Geflechtsabschluß, da der Nachteil des Aufspleissens des Geflechts durch dessen Fehlen nicht mehr gegeben ist. In speziellen Fällen kann es erforderlich sein, daß in die das Lumen und den Heizleiter umschließende Schlauchwandung eine Verstärkung eingebracht ist. Dies kann beispielsweise bei längeren Schläuchen vorteilhaft sein. Diese Verstärkung kann ebenfalls -z.B. als Gewebeverstärkung - während des Extrusionsvorganges über den Querspritzkopf mit eingebracht werden. An der einfachen Produktion des neuerungsgemäßen Flüssigkeitsschlauches ändert sich dadurch nichts. Es ist gerade der besondere Vorteil, daß der Schlauch mit dem Lumen, dem Heizleiter und ggf. einer Verstärkung einstückig hergestellt werden kann.

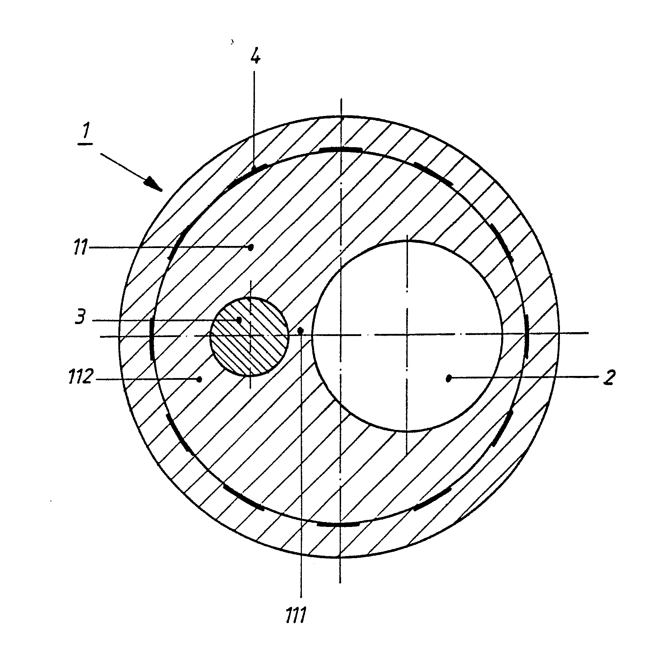

In der Zeichnung ist ein Ausführungsbeispiel des neuerungsgemäßen Flüssigkeitsschlauches im Querschnitt dargestellt. Der Schlauch 1 besitzt dabei ein seitlich versetztes Lumen 2 und, dadurch bedingt, eine Querschnittsverdickung 11, in welche der Heizleiter 3 eingebettet ist. Der Schlauchwandbereich 111 zwischen dem Lumen 2 und dem Heizleiter 3 ist in der Darstellung deutlich dünner ausgelegt als der Schlauchwandbereich 112 zwischen dem Heizleiter 3 und der Oberfläche des Flüssigkeitsschlauches 1. Im Abstand unter der Oberfläche des Flüssigkeitsschlauches 1 ist eine Armierung 4 angedeutet, welche so in die Wandung des Flüssigkeitsschlauches 1 eingebracht ist, daß sowohl das Lumen 2 als auch der Heizleiter 3 von der Armierung 4 unberührt bleiben. Auf diese Weise kann die Armierung 4 auch aus einem metallischen Drahtgeflecht bestehen, wobei einerseits eine Korrosion durch aus dem Lumen 2 stammende Flüssigkeit als auch eine negative Abführung von Heizenergie durch Berührung des Heizleiters 3 vermieden wird.

Der Schlauchwandbereich 111 zwischen dem Lumen 2 und dem Heizleiter 3 ist in seiner Dicke derart gewählt, daß der kürzeste Weg der Heizenergie aus dem Heizleiter 3 in das Lumen 2 gesichert ist. Auf diese Weise wird der Energieverbrauch minimiert, denn die Energie des Heizleiters 3 durchdringt die geringe Wanddicke des Schlauchwandbereiches 111 ohne größere Energieverluste. Der dickere Schlauchwandbereich 112 zwischen dem Heizleiter 3 und der Oberfläche des Flüssigkeitsschlauches 1 schirmt den Energieaustritt nach außen ab, so daß die durch den Heizleiter 3 erzeugte Energie im wesentlichen auf des Lumen 2 und die darin geführte Flüssigkeit ausstrahlt. Damit ist ein Einfrieren der im Lumen 2 transportierten Flüssigkeit ohne größeren Aufwand mit dem neuerungsgemäßen Flüssigkeitsschlauch zu verhindern.

**Ansprüche**

1. Flüssigkeitsschlauch aus Kunststoff, insbesondere für Scheibenwaschanlagen in Kraftfahrzeugen, wobei der Schlauch längsverlaufend mit einem Heizleiter verbunden ist, dadurch gekennzeichnet, daß das Lumen (2) des Schlauches (1) unter Bildung einer längsverlaufenden Querschnittsverdickung (11) einseitig versetzt ist, und daß der Heizleiter (3) mit Abstand zum Lumen (2) derart in die Querschnittsverdickung (11) eingebracht ist, daß der Schlauchwandbereich (111) zwischen Lumen (2) und Heizleiter (3) im Querschnitt dünner ist als der Schlauchwandbereich (112) zwischen dem Heizleiter (3) und der Oberfläche des Schlauches (1).

2. Flüssigkeitsschlauch nach Anspruch 1, dadurch gekennzeichnet, daß in die das Lumen (2) und den Heizleiter (3) umschließende Schlauchwandung eine Verstärkung (4) eingebracht ist.

3. Flüssigkeitsschlauch nach Ansprüchen 1 und 2, dadurch gekennzeichnet, daß der Schlauch (1) mit Lumen (2), Heizleiter (3) und Verstärkung (4) einstückig hergestellt ist.

**Europäisches Patentamt**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH-A- 317 654 (SPOTHELFER) <br> * Anspruch 2; Figur 2 * | 1 | F 16 L 53/00 |
| A | | 2,3 | |
| Y | FR-A-2 165 269 (RHONE-POULENC) <br> * Seite 1, Zeile 24 - Seite 2, Zeile 12; Figuren 1-4 * | 1 | |
| A | | 3 | |
| A | PATENT ABSTRACTS OF JAPAN, Band 2, Nr. 12 (M-77)][6787], 27. Januar 1978; & JP - A - 52 125 815 (KUBOTA TEKKO) 22.10.1977 | 1 | |
| D,A | DE-U-8 520 557 (HEMSTEDT GMBH) <br> * Figur III; Ansprüche * | 1 | RECHERCHIERTE SACHGEBIETE (Int. Cl.4) <br> F 16 L 53/00 <br> F 16 L 11/00 <br> F 16 L 9/00 |
| A | DE-A-2 008 400 (LICENTIA) | | |

Der vorliegende Recherchenbericht wurde für alle Patentansprüche erstellt.

| Recherchenort | Abschlußdatum der Recherche | Prüfer |
|---|---|---|
| BERLIN | 06-11-1987 | SCHAEFFLER C.A.A. |